Europäisches Patentamt

European Patent Office

Office européen des brevets

(19)

(11) **EP 0 517 268 B1**

(12) **EUROPÄISCHE PATENTSCHRIFT**

(45) Veröffentlichungstag und Bekanntmachung des Hinweises auf die Patenterteilung:
**27.11.1996 Patentblatt 1996/48**

(51) Int Cl.[6]: **H04Q 3/545**, H04M 3/42, H04M 11/06

(21) Anmeldenummer: **92109584.0**

(22) Anmeldetag: **05.06.1992**

(54) **Verfahren zur Lastverteilung in Kommunikationssystemen**

Method for load distribution in communication systems

Méthode pour répartir la charge dans des systèmes de communication

(84) Benannte Vertragsstaaten:
**AT BE CH DE DK ES FR GB GR IT LI NL SE**

(30) Priorität: **06.06.1991 DE 4118623**

(43) Veröffentlichungstag der Anmeldung:
**09.12.1992 Patentblatt 1992/50**

(73) Patentinhaber: **SIEMENS AKTIENGESELLSCHAFT
80333 München (DE)**

(72) Erfinder:
• **Lukas, Günter
A-2000 Stockerau (AT)**

• **Ramberger, Friedrich
A-2332 Hennersdorf (AT)**
• **Spahl, Siegfried
W-8039 Puchheim (DE)**

(56) Entgegenhaltungen:
**WO-A-85/00489          DE-A- 3 629 406
US-A- 4 131 762**

• **IBM TECHNICAL DISCLOSURE BULLETIN Bd. 27, Nr. 3 , August 1984 , NEW YORK US Seiten 1769 - 1770 FREUND 'Flexible buffer pooling with an SNA receiving station'**

**Beschreibung**

Die Komplexität von Kommunikationssystemen hat während ihres Entwicklungsprozesses stetig zugenommen. Dies liegt insbesondere daran, daß die Kommunikationsbedürfnisse sowie die Kommunikationswege des Menschen sich aufgrund neuer Organisationsstrukturen grundlegend gewandelt haben, und demzufolge neue Leistungsmerkmale und Dienste in die Kommunikationssysteme implementiert werden mußten. So haben beispielsweise Kommunikationssysteme, die zur Bürokommunikation eingesetzt werden, in den letzten Jahren für die angeschlossenen Teilnehmer Möglichkeiten eröffnet, auf unterschiedlichen Ebenen unter Benutzung einer Vielzahl von Leistungsmerkmalen und Diensten miteinander zu kommunizieren. So wurde die bis dahin existierende Kommunikationsform 'SPRACHE' um Leistungsmerkmale wie 'WAHLWIEDERHOLUNG', 'ANRUFUMLEITUNG', 'KURZWAHL' etc. erweitert, sowie neue Dienste wie 'TELEFAX', BILDÜBERTRAGUNG' etc. eingeführt. Die Bereitstellung neuer Leistungsmerkmale und Dienste erfordern aber in der Regel ein umfangreiches und detailliertes Zusammenspiel der in den jeweiligen Kommunikationssystemen residenten Prozeduren. Dieses Zusammenspiel gestaltet sich aber mit wechselndem Grad an Komplexität der ablaufenden Prozeduren zunehmend schwieriger. So treten in der Praxis Probleme auf, die ein einwandfreies Kommunizieren zweier/mehrerer Teilnehmer untereinander erschweren. An Kommunikationssysteme müssen daher bezüglich ihres fehlerfreien Ablaufs besonders hohe Anforderunge gestellt werden. Die entsprechenden Parameter sind weltweit durch internationale Normierungsgremien - beispielsweise die CCITT - festgelegt, wobei dem Parameter 'Ausfallwahrscheinlichkeit' eine besondere Bedeutung zukommt. Die an Kommunikationssysteme gestellten Anforderungen unterscheiden sich aber dabei generell von denen, die an herkömmliche Datenverarbeitungsanlagen gestellt werden. Demzufolge erfolgt auch das Zusammenspiel der Prozeduren eines Kommunikationssystems grundlegend anders als in einer Datenverarbeitungsanlage.

Den Prozeduren der Vermittlungstechnik kommt insofern eine besondere Bedeutung zu, als sie die Bausteine der Leistungsmerkmale und Dienste bilden. Um dieses Zusammenspiel von außen beeinflussen und steuern zu können, sind auf dem Bürokommunikationssektor an die dort verwendeten Kommunikationssysteme Datenverarbeitungsanlagen über entsprechende Verbindungsleitungen angeschlossen. Solche für Bürokommunikationszwecke verwendeten Kommunikationssysteme sind u. a. aus zwei Beiträgen der Druckschrift "ISDN im Büro", Sonderausgabe 'Telcom Report' und Siemens-Magazin "COM" der Firma Siemens, Berlin und München, 1985, (ISBN 3-8009-3846-4; "Hardware-Struktur des HICOM-Kommunikationscomputers", Seiten 58 bis 66; "HICOM-Software von heute für morgen", Seiten 67 bis 75), den deutschen Offenlegungsschriften DE 37 27 952 AI, DE 34 07 215 A1 bereits bekannt. Weiterhin sind Systeme, in denen Datenverarbeitungsanlagen an Kommunikationssysteme der zuvor angegebenen Art anschließbar sind, aus der amerikanischen Patentschrift 5 007 080 sowie aus dem Aufsatz von M. Doll: "Computer Supported Telephony Application - Telekommunikation und DV im Duett" aus NTZ, Band 43 (1990), Heft 11, Seiten 820 bis 824, bekannt.

Zum einen werden derartige Datenverarbeitungsanlagen als Speichersysteme für spezielle vermittlungstechnische Daten des Kommunikationssystems, wie beispielsweise Gebührendaten, Teilnehmerdaten etc. benutzt. Zum anderen laufen auf jenen Datenverarbeitungsanlagen umfangreiche Prozeduren und Prozesse ab, die dem Anwender Eingriffsmöglichkeiten in die vermittlungstechnischen Prozeduren des Kommunikationssystems bieten. Insbesondere die Darlegungen im letztgenannten Stand der Technik zeigen hierfür mehrere Beispiele auf. So können Leistungsmerkmale und Dienste sowohl miteinander, als auch mit externen, z.B. in jenen angeschlossenen Datenverarbeitungsanlagen ablaufenden Prozeduren, verknüpft und in ihrem Ablauf automatisiert werden. Derart automatisierte Abläufe bezeichnet man generell als Applikation oder Funktion. Die eine Applikation realisierenden Programme sind auf der angeschlossenen Datenverarbeitungsanlage abgelegt. Die von dem Kommunikationssystem realisierbaren Leistungsmerkmale sind im Kommunikationssystem selbst abgespeichert und besitzen jeweils externe Schnittstellen. Aufgrund ihrer modularen Struktur können die Leistungsmerkmale über diese Schnittstellen von den Applikationen der Datenverarbeitungsanlage angesteuert und benutzt werden. So können beispielsweise die Applikationen auf ein in der Datenverarbeitungsanlage abgespeichertes elektronisches Telefonbuch zugreifen und entsprechend ihrem internen Algorithmus das Leistungsmerkmal 'ANWAHL' im Kommunikationssystem ansteuern. In Abhängigkeit vom jeweiligen Ergebnis (z. B. B-Teilnehmer belegt) können dann weitere, im elektronischen Telefonbuch abgespeicherte Teilnehmer in alphabetischer Reihenfolge unter Benutzung dieses Leistungsmerkmals angewählt werden. Die Applikation oder Funktion 'TELEMARKETING' repräsentiert ein Beispiel für derart automatisierte Abläufe. TELEMARKETING stellt für einen Kundenberater eine besonders leistungsfähige Funktion zur vertrieblichen Unterstützung dar:

So werden im Falle einer beabsichtigten, telefonischen Kontaktaufnahme durch den Kundenberater die jeweiligen Kunden entsprechend einer in der angeschlossenen Datenverarbeitungsanlage abgelegten Kundenliste angewählt, und ein telefonischer Kontakt zwischen Kundenberater und Kunde hergestellt. Parallel dazu werden am Arbeitsplatz des Kundenberaters spezielle, kundenspezifische Daten - wie z. B. Adresse, Alter, Umsätze im letzten Geschäftsjahr etc. - über ein Datensichtgerät sichtbar gemacht. Ist das Endgerät des Kunden jedoch belegt, erfolgt in regelmäßigen, zeitlichen Abständen ein erneutes automatisches Anwählen durch das System. Das Beispiel der Funktion 'TELEMARKETING' zeigt das Zusammenspiel der Prozeduren der Datenverarbeitungsanlage mit den vermittlungstechnischen Prozeduren des Kommunikationssystems. Dabei werden über die zwischen dem Kommunikationssystem und der Datenverarbeitungsanlage bestehende Verbindungsleitungen Informationsdaten sowie Zustandsdaten bidirektional ausgetauscht. Die Datenübertragung erfolgt in der Regel nach einem in der Technik allgemein bekannten Quittungsverfahren ("Handshaking").

Generell werden in der Technik bei Datenübertragungsproblemen sogenannte Pufferspeicher eingeführt, wie sie in der Enzyklopädie Naturwissenschaft und Technik, Landsberg am Lech, 1980 Verlag Moderne Industrie, Seite 3469 (ISBN 3-478-41830-5) oder in P. R. Gerke: "Rechnergesteuerte Vermittlungssysteme", Berlin-Heidelberg-New York, 1972, (ISBN: 3-540-05770-6), Seite 184, ausführlich beschrieben sind. Dabei handelt es sich um Speichersysteme zur zeitlichen Koordinierung von Übertragungsvorgängen. Eine Koordinierung ist insbesondere dann erforderlich, wenn Daten unregelmäßig und damit in einem nicht vorhersehbaren Zeitraum anfallen. In diesem Fall werden jene Daten in einen Pufferspeicher gesammelt und anschließend blockweise über die jeweilige Verbindungsleitung übertragen.

Ein Beispiel für unregelmäßig anfallende Daten sind Zustandsdaten, insbesondere Zustandsdaten von Teilnehmerendgeräte, wie z. B. Teilnehmerendgerät belegt, frei, Einleiten eines Verbindungswunsches von Seiten des Teilnehmerendgerätes aus. Sie geben Auskunft über Zustand oder Zustandsänderungen der an einem Kommunikationssystem angeschlossenen Teilnehmerendgeräte, und fallen dabei zeitlich unregelmäßig und gegebenenfalls in großer Anzahl an. Sie werden beispielsweise von der Funktion 'TELEMARKETING' analysiert und ausgewertet. Zu diesem Zweck werden sie über die Verbindungsleitung zur Datenverarbeitungsanlage übertragen, da hier Analyse- und Auswertevorgänge der Zustandsdaten durch dort ablaufende Prozeduren stattfinden. An den Enden der Verbindungsleitung sind zur zeitlichen Koordinierung der Übertragungsvorgänge Pufferspeicher angeordnet. Die in zeitlich unregelmäßiger Abfolge anfallenden Zustandsdaten werden im Pufferspeicher gesammelt und anschließend blockweise über die Verbindungsleitung übertragen.

Beim Stand der Technik werden die Übertragungsvorgänge derart realisiert, daß den in der Datenverarbeitungsanlage ablaufenden Funktionen - wie z. B. der Funktion 'TELEMARKETING' - Speicherplatz im Pufferspeicher - in Form von Unterbereichen - fest zugewiesen wird, und somit der Zugriff jener Funktionen auf Unterbereiche des Pufferspeichers ermöglicht. Problematisch ist hierbei jedoch, daß jene Zustandsdaten in Zeiten hoher Verkehrsbelastung in einer sehr großen Anzahl übertragen werden müssen und demzufolge die Kapazität der Unterbereiche des Pufferspeichers sehr schnell erschöpft ist. In diesem Fall müssen Prozeduren der Sicherheitstechnik vorgesehen sein, die dafür Sorge tragen, daß die Verbindungsleitung sofort außer Betrieb genommen wird, da beim Überlauf nur ein Teil der Zustandsdaten übertragen werden und somit ein unvollständiges Abbild der Teilnehmerendgeräte in der Datenverarbeitungsanlage entstehen würde. Weiterhin zeigt sich, daß nur einige Unterbereiche in Spitzenlastzeiten schnell an ihrer Kapazitätsgrenze angelangt sind, während andere noch über genügend Speicherkapazität verfügen.

Der Abbruch einer Verbindung ist zwangsläufig mit einem Verlust aller Zustandsdaten verbunden. Als Konsequenz bedeutet dies, daß die in der Datenverarbeitungsanlage ablaufenden Prozeduren und Funktionen keine Informationen über Zustände/Zustandsänderungen der am Kommunikationssystem angeschlossenen Teilnehmerendgeräte mehr besitzen.

Die Zustandsdaten werden üblicherweise auf ein externes Speichermedium ausgelagert, so daß sie über entsprechende Ladeprozeduren zum einen späteren Zeitpunkt wieder verfügbar sind. Beim Stand der Technik wird der Pufferspeicher üblicherweise in Relation zu den anfallenden Datenmengen mit einer großzügig bemessenen Reserve dimensioniert, womit in der Regel ein Überlauf vermieden wird. Einer derart großzügig ausgestalteten Dimensionierung sind jedoch enge wirtschaftliche Grenzen gesetzt. In der Praxis bedeutet dies, daß auch ein mit einer Reserve ausgestatteter Pufferspeicher die in Spitzenlastzeiten anfallenden Daten nicht mehr bewältigen kann und somit in seiner Kapazität - wenn auch entsprechend langsamer als ein Pufferspeicher ohne Reserve - erschöpft ist; letztendlich ist auch hier eine Außerbetriebnahme der Verbindungsleitung nicht zu vermeiden. Der Ausfall der Verbindungsleitung bedeutet natürlich eine nicht erwünschte Einschränkung des Betriebszustandes des Kommunikationssystems in seinem Zusammenwirken mit der Datenverarbeitungsanlage.

Der Erfindung liegt somit das Problem zugrunde, ein Verfahren für ein Kommunikationssystem anzugeben, welches in einem dort angeordneten Pufferspeichersystem vorhandenen Speicherplatz in der Weise aufteilt, daß ein Überlauf des Pufferspeichersystems in einem erweiterten Umfang ausgeschlossen bzw. weitgehend vermieden wird.

Diese Aufgabe wird ausgehend vom Oberbegriff des Patentanspruches 1 erfindungsgemäß durch dessen kennzeichnende Merkmale gelöst.

Wesentlich für die Erfindung ist eine Kombination aus einem festen und einem dynamischen Pufferzuteilungsverfahren. Das feste Pufferzuteilungsverfahren trägt dazu bei, daß jede der in der Datenverarbeitungsanlage ablaufenden Funktionen zu jedem Zeitpunkt Speicherplatz in Form von Unterbereichen im Pufferspeichersystem zugeteilt wird. Dies hat insbesondere den Vorteil, daß für jede Funktion jederzeit Speicherplatz verfügbar ist. Das dynamische Pufferzuteilungsverfahren trägt dazu bei, daß nur die in der Datenverarbeitungsanlage ablaufenden Funktionen Speicherplatz in Form von Unterbereichen im Pufferspeichersystem erhalten, wenn sie ihn auch benötigen. Die Kombination beider Pufferzuteilungsverfahren trägt dabei den unterschiedlichen Erfordernissen der jeweiligen in der Datenverarbeitungsanlage ablaufenden Funktionen Rechnung. Die Kombination kann in der Weise bestimmt werden, daß das feste oder das dynamische Pufferzuteilungsverfahren unterschiedlich gewichtet wird, je nach dem, ob das feste oder das dynamische Pufferzuteilungsverfahren überwiegen soll. Weiterhin wird damit berücksichtigt, inwieweit der Gesichtspunkt des aktuell benötigten Speicherplatzes oder der Reserve zur Geltung kommen soll.

Die Kombination wird insbesondere durch den Mittelwert beider Verfahren gebildet.

Die Mittelwertbildung beider Zuteilungsverfahren erfolgt in der gleichen Weise wie bei der Mittelwertbildung fester Zahlen. Für die zwei Funktionen $f_1$ und $f_2$ ergibt sich also der Mittelwert $m$, in diesem Fall also zweier Funktionen zu $m = \frac{1}{2} \times (f_1 + f_2)$.

Der Vorteil einer derartigen Mittelwertbildung aus beiden Pufferzuteilungsverfahren liegt darin, daß sich ein Optimum zwischen der dynamischen Vergabe von Speicherplatz für die Funktionen, die gerade Speicherplatz benötigen, und der Reserve für die Funktionen, die momentan noch keinen Speicherplatz benötigen, ergibt.

Im folgenden wird die Erfindung anhand eines figürlich dargestellten Ausführungsbeispiels sowie einer zum besseren Verständnis dienenden Tabelle näher erläutert.

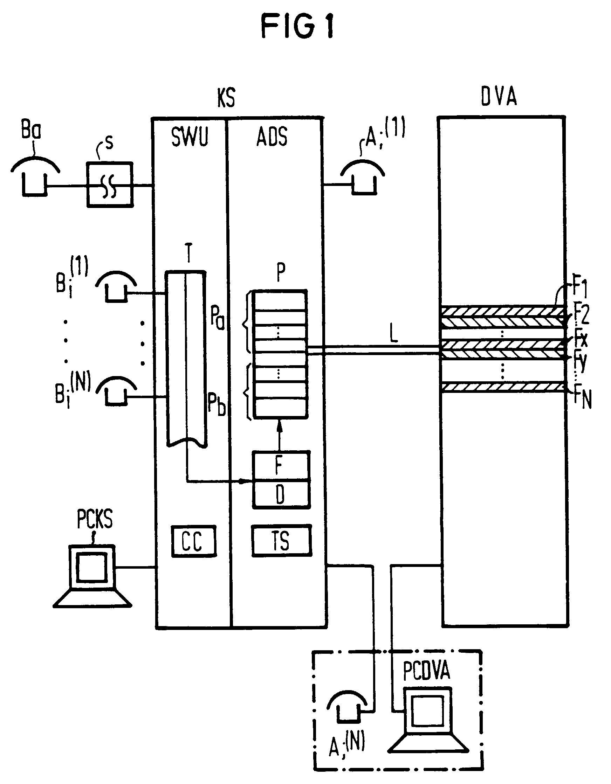

FIG 1 zeigt ein modularstrukturiertes Kommunikationssystem KS, das über eine Verbindungsleitung L mit einer Datenverarbeitungsanlage DVA verbunden ist. Am Kommunikationssystem KS sind Teilnehmerendgeräte $B_i^{(l)} \dots B_i^{(N)}$, $A_i^{(l)} \dots A_i^{(N)}$, die für interne Bürokommunikationszwecke verwendet werden, sowie Datensichtgeräte PCKS angeschaltet. Weiterhin sind über Schnittstellenelemente S externe Teilnehmerendgeräte $B_a$ herangeführt. Unter externen Teilnehmerendgeräten sind insbesondere die Endgeräte der öffentlichen Kommunikationsnetze zu verstehen. Das Kommunikationssystem KS besteht aus einer Durchschalteinheit SWU sowie einem integrierten Server ADS. Die Durchschalteinheit SWU weist eine zentrale Steuerung CC auf, während der integrierte Server ADS mit einer mit der zentralen Steuerung CC zusammenarbeitenden Teilsteuerung TS versehen ist. Der Server ADS ist für die Bereitstellung der zum Betrieb des Kommunikationssystems KS notwendigen Systemprozeduren verantwortlich. Im integrierten Server ADS befindet sich der Pufferspeicher P. An ihn ist die ausgangsseitige Verbindungsleitung L herangeführt. Diese bildet die Verbindung zu einer Datenverarbeitungsanlage DVA. Dort sind Funktionen $F_1 \dots F_x$, $F_y \dots F_N$, im folgenden Applikationen genannt, abgelegt, über die der Anwender die vermittlungstechnischen Prozeduren des Kommunikationssystems KS ansteuert. Weiterhin sind an die Datenverarbeitungsanlage DVA Datensichtgeräte PCDVA angeschaltet. Sie bilden zusammen mit wenigstens einem an das Kommunikationssystem KS angeschalteten Teilnehmerendgeräte $A_i^{(N)}$ einen für einen Kundenberater ausgestalteten Arbeitsplatz A. In der Durchschalteinheit SWU ist eine Zuordnungstabelle T abgelegt. Dort werden die in der Datenverarbeitungsanlage DVA ablaufenden Applikationen $F_1 \dots F_N$ den Teilnehmerendgeräten $B_i^{(n)}$, $A_i^{(n)}$, $B_a$ zugewiesen; somit ist definiert, welche Applikation $F_1 \dots F_N$ die Zustandsdaten welches der Teilnehmerendgeräte $B_i^{(n)}$, $A_i^{(n)}$, $B_a$ bearbeitet. Diese Zuordnung wird den in dem integrierten Server ADS abgelegten Pufferzuteilungsprozeduren F, D über spezielle Übertragungsprozeduren mitgeteilt.

Über die Verbindungsleitung L findet ein reger Datenaustausch zwischen Kommunikationssystem KS und Datenverarbeitungsanlage DVA statt. Zu diesem Zweck sind in der Datenverarbeitungsanlage DVA Prozeduren für die Datenübertragung sowie Prozeduren zur weiteren Verarbeitung der Datenformate der übertragenen Daten bereitgestellt. Die Zustandsdaten werden von den Teilnehmerendgeräten $B_i^{(n)}$, $A_i^{(n)}$, $B_a$ in unregelmäßiger Abfolge in dem Pufferspeicher P geladen, und von dem Applikationen $F_1 \dots F_N$ blockweise in die Datenverarbeitungsanlage DVA über die Verbindungsleitung L übertragen. Der Zugriff der Applikationen $F_1 \dots F_N$ auf den Pufferspeicher P wird über die Pufferzuteilungsfunktionen F, D gesteuert, die den Applikationen $F_1 \dots F_N$ Unterbereiche im Pufferspeichersystem P bereitstellen, wobei die feste Pufferzuteilungsfunktion F erste Unterbereiche des Pufferspeichersystems P den zweiten Applikationen $F_1 \dots F_x$ zuteilt, und die dynamische Pufferzuteilungsfunktion D zweite Unterbereiche des Pufferspeichersystems P den ersten Applikationen $F_y \dots F_N$ zuteilt.

Um die Kombination aus dem festen Pufferzuteilungsverfahren, realisiert durch die feste Pufferzuteilungsfunktion F, und dem dynamischen Pufferzuteilungsverfahren, realisiert durch die dynamische Pufferzuteilungsfunktion D, zu erläutern, wird zunächst nur auf die feste Pufferzuteilungsfunktion F und anschließend auf die dynamische Pufferzuteilungsfunktion D eingegangen:

Durch die feste Pufferzuteilungsfunktion F werden die im Pufferspeicher P zur Verfügung stehenden Speicherplätze auf die Applikationen $F_1 \dots F_x$ aufgeteilt. Bei den Applikationen $F_1 \dots F_x$ handelt es sich um jene Applikationen, die noch keinen Speicherplatz im Pufferspeichersystem P benötigen. Dieses Zuteilungsverfahren ist mathematisch durch die Formel

$$P_a = \frac{P_s}{A_a}$$

repräsentiert.
Dabei bedeuten

$P_a$:    zugewiesener Speicherbereich pro Applikation $A_a$,

$P_s$:    Gesamtzahl der Speicherplätze im Pufferspeicher P, und

$A_a$:    Anzahl der Applikationen, die noch keinen Speicherplatz zum Zeitpunkt $t_0$ im Pufferspeicher P benötigen, mit $A_a = F_1...F_x$.

Durch die dynamische Pufferzuteilungsfunktion D werden Speicherbereiche des Pufferspeichers P auf die Applikationen $F_y...F_N$ aufgeteilt, die zu einem bestimmten Zeitpunkt $t_0$ mathematisch durch die Formel

$$P_p = \frac{P_s}{A_p}$$

repräsentiert.
Dabei bedeuten

$P_p$:    zugewiesener Speicherbereich pro Applikation $A_p$,

$P_s$:    Gesamtanzahl der Speicherplätze im Pufferspeicher P, und

$A_p$:    Anzahl der Applikationen, die jetzt Speicherplatz im Pufferspeicher P benötigen, mit $A_p = F_y...F_N$.

Eine beiden Anforderungen gerecht werdende Lösung besteht, wie bereits erwähnt, in der Bildung des Mittelwertes aus der Pufferzuteilungsfunktion F und der Pufferzuteilungsfunktion D. Hierbei wird in der angegebenen Formel für die Mittelwertbildung $f_1 = F$ und $f_2 = D$ gesetz. Daraus ergibt sich:

$$P = \frac{1}{2} \times (F + D)$$

$$P = \frac{1}{2} \times \left( \frac{P_s}{A_a} + \frac{P_s}{A_p} \right).$$

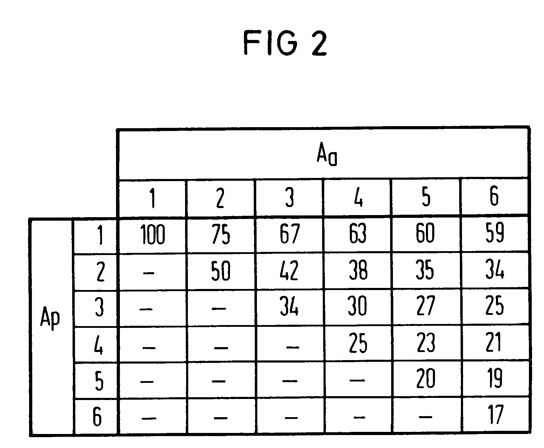

Dieser Zusammenhang ist auch in Figur 2 tabellarisch dargestellt, wobei die dort angegebene Anzahl von Speicherplätzen ($P_s = 100$) jeweils aufgerundet ist. Diese Tabelle wurde mit einer gesamten Pufferspeicherkapazität $P_s$ von 100 Speicherplätzen berechnet. Zur besseren Lesbarkeit der Tabelle seien noch einige Beispiele angeführt:

1. $A_a = 1$, $A_p = 1$

Nur eine Applikation (A = 1) ist in der Datenverarbeitungsanlage DVA vorhanden und diese eine Applikation ($A_p = 1$) benötigt Speicherplatz: In diesem Fall werden dieser Applikation alle 100 Speicherplätze ("zweite Unterbereiche") des Pufferspeichersystems P zur Verfügung gestellt.

2. $A_a = 2$, $A_p = 1$

Zwei Applikationen (A = 2) sind in der Datenverarbeitungsanlage DVA vorhanden, von denen aber nur eine Speicherplätze benötigt ($A_p = 1$).

Der letztgenannten Applikation werden gemäß Tabelle 75 Speicherplätze ("zweite Unterbereiche") des Pufferspeichersystems P zur Verfügung gestellt.

Braucht eine weitere Applikation Speicherplatz ($A_p = 2$), so sind ausreichend Reserven vorhanden, im speziellen Fall 25 Speicherplätze ("erste Unterbereiche des Pufferspeichersystems P"). Dieser Reservespeicherplatz wird der zweiten Applikation, unmittelbar nachdem sie Speicherplatz benötigt, zur Verfügung gestellt. Allerdings berechnen sich danach die zur Verfügung gestellten Pufferspeicherplätze P grundlegend neu, da jetzt $A = A_p = 2$ gilt. Nach einer bestimmten 'Einschwingzeit' in der diese Berechnung durchgeführt wird, werden dann jeder Applikation 50 Speicherplätze des Pufferspeichersystems P zur Verfügung gestellt.

3. $A_a = 4$, $A_p = 2$

Zum Zeitpunkt $t_0$ brauchen von vier in der Datenverarbeitungsanlage DVA vorhandenen Applikationen (A = 4) zwei Applikationen ($A_p = 2$) Speicherplätze im Pufferspeichersystem P; die zwei restlichen Applikationen brauchen zunächst noch keinen Speicherplatz. Gemäß der in Figur 2 dargestellten Tabelle werden den beiden ersten Applikationen je 38 Speicherplätze zur Verfügung gestellt. Zum Zeitpunkt $t_{0+1}$ benötigt die dritte Applikation (A = 4, $A_p = 3$) Speicherplatz. Damit ändert sich aber auch die Zuordnung der Speicherplätze zu den Applikationen. Im folgenden werden also den drei Applikationen je 30 Speicherplätze zur Verfügung gestellt. Die Zuteilung des Speicherplatzes wird insbesondere dann erleichtert, wenn die beiden ersten Applikationen zum Zeitpunkt $t_0$ die ihnen zugeordneten Speicherplätze noch nicht voll ausgeschöpft haben. In diesem Fall kann die in diesen zugeordneten Speicherplätzen noch vorhandene freie Kapazität den neu hinzukommenden Applikationen zugewiesen werden. Ist allerdings die Kapazität der den beiden ersten Applikationen zugewiesenen Speicherplätze - in diesem Fall also 38 - voll ausgeschöpft (was zum Zeitpunkt $t_0$ noch zulässig ist), so kann zu diesem Zeitpunkt den neu hinzukommenden Applikationen noch kein freier Speicherplatz zugewiesen werden. Wenn allerdings die zugewiesenen Speicherplätze nicht voll ausgeschöpft oder aber die ursprünglich voll ausgeschöpften Speicherplätze nach kurzer Zeit frei werden, dann wird diese freie Kapazität den neu hinzutretenden Applikationen zugewiesen. Damit ist dann - wenn auch nach einer relativ kurzen Zeitspanne - der Zustand gemäß Tabelle wieder hergestellt. Tritt jedoch der praktisch nicht relevante Sonderfall ein, daß jede Applikation den ihr zustehenden Speicherplatz voll ausgeschöpft hat und eine weitere Applikation mindestens den Speicherplatz benötigt als ihr laut Tabelle zusteht, müssen Prozeduren der Sicherheitstechnik für den Abbruch der Verbindung zwischen Kommunikationssystem KS und Datenverarbeitungsanlage DVA sorgen.

Das erfindungsgemäße Verfahren zur Pufferaufteilung stellt somit eine optimale Ausnutzung des Pufferspeichersystems P sicher. Zwar besteht auch hier eine Restwahrscheinlichkeit, daß der Überlauf eines einer Applikation zugeordneten Speicherbereichs zum Abbruch der Verbindung führt. Diese Restwahrscheinlichkeit ist jedoch, wie Simulationsversuche typischer Abläufe in der Praxis demonstriert haben, weitaus geringer als bei herkömmlichen Lastverteilungsverfahren in Kommunikationssystemen.

Die Kapazitätsgrenze des Pufferspeichers P wird beim erfindungsgemäßen Verfahren erst nach einem sehr viel größeren Zeitraum erreicht, als dies beim Stand der Technik der Fall ist. Dieser Vorteil zeigt sich auch bei der Funktion 'TELEMARKETING', deren Ablauf unmittelbar von der Verarbeitung den Zustandsdaten der Teilnehmerendgeräte $B_i^{(l)} \dots B_i^{(N)}$, $A_i^{(l)} \dots A_i^{(N)}$, $B_a$ abhängt, wird durch ein derartiges Pufferzuteilungsverfahren unterstützt.

**Patentansprüche**

1. Verfahren zur Pufferaufteilung in einem Kommunikationssystem (KS),

   das mit einer Datenverarbeitungsanlage (DVA) über eine Verbindungsleitung (L) verbunden ist, wobei in der Datenverarbeitungsanlage (DVA) Applikationen ($F_1$ - $F_x$, $F_y$ - $F_n$) ablaufen, mit ersten Applikationen ($F_y$ - $F_n$), die zu einem bestimmten Zeitpunkt ($t_0$) in ihrem Ablauf Speicherplatz in einem Pufferspeichersystem (P) benötigen, mit zweiten Applikationen ($F_1$ - $F_x$), die zu dem Zeitpunkt ($t_0$) noch keinen, aber zu einem späteren Zeitpunkt ($t_{0+1}$) Speicherplatz in dem Pufferspeichersystem (P) benötigen, und das ein Pufferspeichersystem (P) enthält, das mit der Verbindungsleitung (L) verbunden ist, und in dem Daten, insbesondere Zustandsdaten des Kommunikationssystems (KS), gesammelt werden, wobei Speicherplatz im Pufferspeichersystem (P) über eine feste Pufferzuteilungsfunktion (F) den zweiten Applikation

($F_1$ - $F_x$) zum Zeitpunkt ($t_0$) zugeteilt wird,

**dadurch gekennzeichnet,**

daß die Pufferaufteilung durch eine Kombination der festen Pufferzuteilungsfunktion (F) und einer dynamischen Pufferzuteilungsfunktion (D) zu einem bestimmten Zeitpunkt ($t_0$) erfolgt, wobei die feste Pufferzuteilungsfunktion (F) erste Unterbereiche des Pufferspeichersystems (P) den zweiten Applikation ($F_1$ - $F_x$) zuteilt, und die dynamische Pufferzuteilungsfunktion (D) zweite Unterbereiche des Pufferspeichersystems (P) den ersten Applikation ($F_y$ - $F_n$) zuteilt.

2. Verfahren nach Anspruch 1,
   **dadurch gekennzeichnet,**
   daß die Kombination eine Mittelwertbildung aus der festen Pufferzuteilungsfunktion (F) und aus der dynamischen Pufferzuteilungsfunktion (D) darstellt.

3. Anordnung zur Durchführung des Verfahrens nach einem der vorstehenden Ansprüche, mit einem Kommunikationssystem (KS), das mit einer Datenverarbeitungsanlage (DVA) über eine Verbindungsleitung (L) verbunden ist, wobei in der Datenverarbeitungsanlage (DVA) Applikationen ($F_1$ - $F_x$, $F_y$ - $F_n$) ablaufen,

   mit ersten Applikationen ($F_y$ - $F_n$), die zu einem bestimmten Zeitpunkt ($t_0$) in ihrem Ablauf Speicherplatz in einem Pufferspeichersystem (P) benötigen, mit zweiten Applikationen ($F_1$ - $F_x$), die zu dem Zeitpunkt ($t_0$) noch keinen, aber zu einem späteren Zeitpunkt ($t_{0+1}$) Speicherplatz in dem Pufferspeichersystem (P) benötigen, und das ein Pufferspeichersystem (P) enthält, das mit der Verbindungsleitung (L) verbunden ist, und in dem Daten, insbesondere Zustandsdaten des Kommunikationssystems (KS), gesammelt werden, wobei Speicherplatz im Pufferspeichersystem (P) über eine feste Pufferzuteilungsfunktion (F) den zweiten Applikation ($F_1$ - $F_x$) zum Zeitpunkt ($t_0$) zugeteilt wird,

**dadurch gekennzeichnet,**

daß das Kommunikationssystem (KS) derart ausgebildet ist, daß die Pufferaufteilung durch eine Kombination der festen Pufferzuteilungsfunktion (F) und einer dynamischen Pufferzuteilungsfunktion (D) zu einem bestimmten Zeitpunkt ($t_0$) erfolgt, wobei die feste Pufferzuteilungsfunktion (F) erste Unterbereiche des Pufferspeichersystems (P) den zweiten Applikation ($F_1$ - $F_x$) zuteilt, und

die dynamische Pufferzuteilungsfunktion (D) zweite Unterbereiche des Pufferspeichersystems (P) den ersten Applikation ($F_y$ - $F_n$) zuteilt.

## Claims

1. Method for buffer partitioning in a communication system (KS) which is connected to a data processing system (DVA) via a connecting line (L), applications ($F_1$ - $F_x$, $F_y$ - $F_n$) running in the data processing system (DVA), having first applications ($F_y$ - $F_n$) which require storage space in a buffer memory system at a specific instant ($t_0$) in their execution, having second applications ($F_1$ - $F_x$) which still do not require storage space in the buffer memory system (P) at the instant ($t_0$), but do so at a later instant ($t_{0+1}$), and which contains a buffer memory system (P) which is connected to the connecting line (L) and in which data, in particular status data of the communication system (KS), are collected, storage space being allocated in the buffer memory system (P) to the second applications ($F_1$ - $F_x$) at the instant ($t_0$) via a fixed buffer allocation function (F), characterized in that the buffer partitioning is performed by a combination of the fixed buffer allocation function (F) and a dynamic buffer allocation function (D) at a specific instant ($t_0$), it being the case that the fixed buffer allocation function (F) allocates first subareas of the buffer memory system (P) to the second applications ($F_1$ - $F_x$), and the dynamic buffer allocation function (D) allocates second subareas of the buffer memory system (P) to the first applications ($F_y$ - $F_n$).

2. Method according to Claim 1, characterized in that the combination represents an averaging of the fixed buffer allocation function (F) and the dynamic buffer allocation function (D).

3. Arrangement for carrying out the method according to one of the preceding claims, having a communication system (KS) which is connected to a data processing system (DVA) via a connecting line (L), applications ($F_1$ - $F_x$, $F_y$ - $F_n$) running in the data processing system (DVA), having first applications ($F_y$ - $F_n$) which require storage space in a buffer memory system (P) at a specific instant ($t_0$) in their execution, having second applications ($F_1$ - $F_x$) which still do not require storage space in the buffer memory system (P) at the instant ($t_0$), but do so at a later instant ($t_{0+1}$), and which contains a buffer memory system (P) which is connected to the connecting line (L) and in which data, in particular status data of the communication system (KS), are collected, storage space being allocated in the buffer memory system (P) to the second applications ($F_1$ - $F_x$) at the instant ($t_0$) via a fixed buffer allocation function (F), characterized in that the communication system (KS) is designed in such a way that the buffer partitioning is performed by a combination of the fixed buffer allocation function (F) and a dynamic buffer allocation function (D) at a specific instant ($t_0$), it being the case that the fixed buffer allocation function (F) allocates first subareas of the buffer memory system (P) to the second applications ($F_1$ - $F_x$), and the dynamic buffer allocation function (D) allocates second subareas of the buffer memory system (P) to the first applications ($F_y$ - $F_n$).

## Revendications

1. Procédé de répartition de la mémoire tampon dans un système de communication (KS),

lequel système est relié à une installation de traitement de données (DVA) par l'intermédiaire d'une ligne de jonction (L), des applications ($F_1$ à $F_x$, $F_y$ à $F_n$) s'exécutant dans l'installation de traitement de données (DVA), avec des premières applications ($F_y$ à $F_n$) qui ont besoin d'emplacements de mémoire dans un système de mémoire tampon (P) à un certain instant ($t_0$) de leur exécution, avec des secondes applications ($F_1$ à $F_x$) qui n'ont pas encore besoin d'emplacement de mémoire dans le système de mémoire tampon (P) à l'instant ($t_0$), mais qui en ont besoin à un instant ultérieur ($t_{0+1}$), et lequel système comportant un système de mémoire tampon (P), qui est relié à la ligne de jonction (L) et dans lequel sont rassemblées des données, notamment des données d'état du système de communication (KS), des emplacements de mémoire dans le système de mémoire tampon (P) étant attribués par l'intermédiaire d'une fonction fixe d'attribution de mémoire tampon (F) aux secondes applications ($F_1$ à $F_x$) à l'instant ($t_0$),

caractérisé par le fait que

la répartition de la mémoire tampon s'effectue à un certain instant ($t_0$) par une combinaison de la fonction fixe d'attribution de mémoire tampon (F) et d'une fonction dynamique d'attribution de mémoire tampon (D),

la fonction fixe d'attribution de mémoire tampon (F) attribuant aux secondes applications ($F_1$ à $F_x$) des premières sous-zones du système de mémoire tampon (P), et la fonction dynamique d'attribution de mémoire tampon (D) attribuant aux premières applications ($F_y$ à $F_n$) des secondes sous-zones du système de mémoire tampon (P).

2. Procédé selon la revendication 1,
   caractérisé par le fait que
   la combinaison correspond à un calcul de moyenne à partir de la fonction fixe d'attribution de mémoire tampon (F) et de la fonction dynamique d'attribution de mémoire tampon (D).

3. Dispositif pour la mise en oeuvre du procédé selon l'une des revendications précédentes, avec un système de communication (KS), lequel système est relié à une installation de traitement de données (DVA) par l'intermédiaire d'une ligne de jonction (L), des applications ($F_1$ à $F_x$, $F_y$ à $F_n$) s'exécutant dans l'installation de traitement de données (DVA),

   avec des premières applications ($F_y$ à $F_n$) qui ont besoin d'emplacements de mémoire dans un système de mémoire tampon (P) à un certain instant ($t_0$) de leur exécution,
   avec des secondes applications ($F_1$ à $F_x$) qui n'ont pas encore besoin d'emplacement de mémoire dans le système de mémoire tampon (P) à l'instant ($t_0$) mais qui en ont besoin à un instant ultérieur ($t_{0+1}$),
   et lequel système comprenant un système de mémoire tampon (P), qui est relié à la ligne de jonction (L) et dans lequel sont rassemblées des données, notamment des données d'état du système de communication (KS), des emplacements de mémoire dans le système de mémoire tampon (P) étant attribués par l'intermédiaire d'une fonction fixe d'attribution de mémoire tampon (F) aux secondes applications ($F_1$ à $F_x$) à l'instant ($t_0$),

   caractérisé par le fait que

   le système de communication (KS) est conçu de telle sorte que la répartition de la mémoire tampon s'effectue à un certain instant ($t_0$) par une combinaison de la fonction fixe d'attribution de mémoire tampon (F) et d'une fonction dynamique d'attribution de mémoire tampon (D),
   la fonction fixe d'attribution de mémoire tampon (F) attribuant aux secondes applications ($F_1$ à $F_x$) des premières sous-zones du système de mémoire tampon (P), et
   la fonction dynamique d'attribution de mémoire tampon (D) attribuant aux premières applications ($F_y$ à $F_n$) des secondes sous-zones du système de mémoire tampon (P).

# FIG 1

# FIG 2

| | | $A_q$ | | | | | |
|---|---|---|---|---|---|---|---|
| | | 1 | 2 | 3 | 4 | 5 | 6 |
| | 1 | 100 | 75 | 67 | 63 | 60 | 59 |
| | 2 | – | 50 | 42 | 38 | 35 | 34 |
| $A_p$ | 3 | – | – | 34 | 30 | 27 | 25 |
| | 4 | – | – | – | 25 | 23 | 21 |
| | 5 | – | – | – | – | 20 | 19 |
| | 6 | – | – | – | – | – | 17 |